# EUROPEAN PATENT SPECIFICATION

(11) **EP 0 579 962 B1**
(45) Date of publication and mention of the grant of the patent: **13.03.1996**
(21) Application number: 93109880.0
(22) Date of filing: 21.06.1993
(51) Int. Cl.: H01F 37/00, H01F 3/10

(54) **Choke coil**
Drosselspule
Bobine d'induction

(30) Priority: 22.06.1992 JP 162473/92
(43) Date of publication of application: 26.01.1994
(73) Proprietor: MATSUSHITA ELECTRIC INDUSTRIAL CO., LTD., Kadoma-shi, Osaka 571 (JP)
(72) Inventor: Sunano, Shuji, Osaka 573 (JP); Ikeda, Yusuke, Uda-gun, Nara 633-02 (JP); Imanishi, Tsunetsugu, Mie 515 (JP); Maeoka, Tatsuo, Kobe-shi, Hyogo 658 (JP)
(74) Representative: Grünecker, Kinkeldey, Stockmair & Schwanhäusser Anwaltssozietät

(56) References cited:
- WO-A-89/07828
- DE-A- 2 405 689
- PATENT ABSTRACTS OF JAPAN vol. 9, no. 43 (E-298)(1766) 22 February 1985 & JP-A-59 182 514 (HITACHI KINZOKU)
- PATENT ABSTRACTS OF JAPAN vol. 9, no. 123 (E-317)(1846) 28 May 1985 & JP-A-60 010 606 (HITACHI KINZOKU)

## Description

The invention relates to a choke coil used in an electronic appliance. The input current of a capacitor input rectifying circuit used in the power source of an electronic appliance contains higher harmonics. The current with poor waveforms adversely affects the other electronic appliances, and consumes the capacity of power device and power feed line uneconomically, and hence it is desired to decrease the higher harmonics. To decrease the higher harmonics, the choke coil is used.

W089/07828 describes a choke coil comprising at least two magnetically separated core sections possessing different magnetic properties on which at least one common coil is wound. When a current flows through the coil, the core sections experience the same magnetic flux. The different magnetic properties give rise to different magnetic fields in the core sections with which selected definable inductance behaviours can be obtained by suitable choice of dimensions. In case of special definable inductance behaviours, the choke must be equipped with additional core sections and/or additional coils in corporated in an additive, series or parallel circuit as each core section comprises only a single closed magnetic circuit.

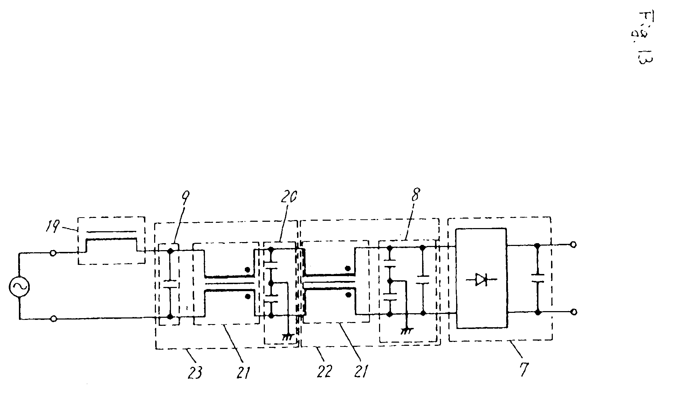

Fig. 12 shows an example of choke coil. A choke coil 19 is composed of a magnetic core 17 having a closed magnetic circuit, and a coil 18 wound thereon.

Fig. 13 shows a power source circuit of an electronic appliance. It comprises a rectifying and smoothing block 7, noise filter blocks 22, 23 incorporating a common mode choke coil 21, and a choke coil 19. The noise filter blocks 22, 23 and choke coil 19 occupy nearly the same space. To downsize the power source circuit, therefore, the choke coil 19 and common mode choke coil 21 are demanded to be in compact size. This demand, however, does not match with the requirement that the choke coil 19 must have a large inductance in order to decrease the higher harmonics of the input current.

The invention therefore presents a choke coil possessing simultaneously the function of decreasing the higher harmonics of the input current and the function as noise filter. The power source using the choke coil of the invention is composed without noise filter, and is hence reduced in size.

The choke coil of the invention having the features of patent claim 1 is of single constitution, and possesses both the function of normal mode choke coil and common mode choke coil.

The first magnetic means and two coils compose the function of the normal mode choke coil necessary for decreasing the higher harmonics of the input current. The second magnetic means and two coils compose the function of common mode choke coil necessary for decreasing the noise between the power source line and the ground. The magnetic flux leaking from the second magnetic means to the first magnetic means composes a part of the function of the normal mode choke coil. When the choke coil of the invention is used in the choke coil 19 of the power source circuit in Fig. 13 mentioned above, since the choke coil of the invention possesses the function of common mode choke coil, the circuit can be composed without using noise filter blocks 22, 23, and the power source circuit is reduced in size. Of course, the cost is reduced too.

Fig. 1 is a perspective view of choke coil in a first embodiment of the invention.

Fig. 2 is an equivalent circuit diagram of the choke coil of the invention.

Fig. 3 is a circuit diagram using the choke coil of the invention.

Fig. 4 is a frequency characteristic diagram of inductance in the normal mode of the choke coil shown in Fig. 1.

Fig. 5 is a frequency characteristic diagram of inductance in the common mode of the choke coil shown in Fig. 1.

Fig. 6 is a perspective view of choke coil in a second embodiment of the invention.

Fig. 7 is a perspective view of choke coil in a third embodiment of the invention.

Fig. 8 is a perspective view of choke coil in a fourth embodiment of the invention.

Fig. 9 is a perspective view of choke coil in a fifth embodiment of the invention.

Fig. 10 is a perspective view of choke coil in a sixth embodiment of the invention.

Fig. 11 is a perspective view of choke coil in a seventh embodiment of the invention.

Fig. 12 is a perspective view of a conventional choke coil.

Fig. 13 is a circuit diagram using the conventional choke coil.

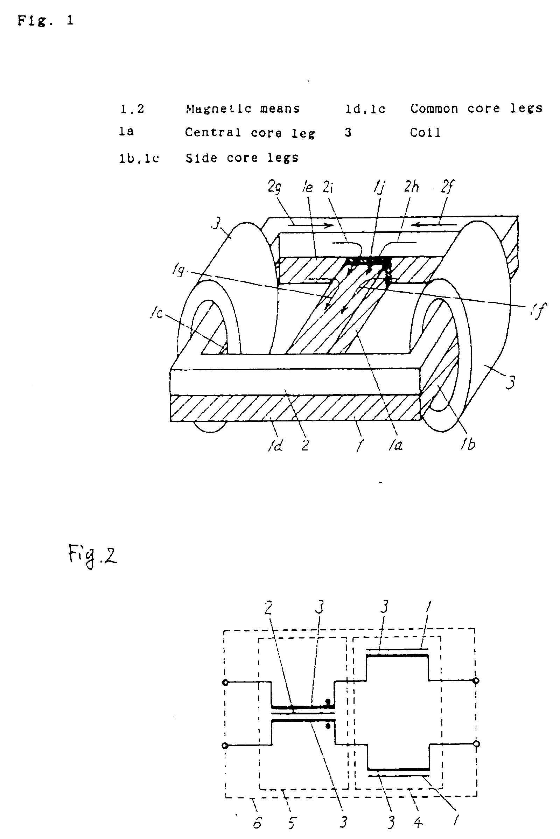

Fig. 1 is a perspective view showing a choke coil in the first embodiment of the invention. The magnetic means 1 composes two closed magnetic circuits by combination of E-shaped magnetic core and I-shaped magnetic core both made of silicon steel plates. The reference number 1j is a magnetic air gap for preventing magnetic saturation.

One of the closed magnetic circuits of the magnetic means 1 is composed of the right half of a common core leg 1e, right half of magnetic air gap 1j, right half of central core leg 1a, right half of common core leg 1d, and side core leg 1b.

The other closed magnetic circuit of the magnetic means 1 is composed of the left half of common core leg 1e, left half of magnetic air gap 1j, left half of central core leg 1a, left half of common core leg 1d, and side core leg 1c.

The magnetic means 2 is a square-shaped magnetic core made of ferrite, which is laid over the magnetic means 1.

One of the coils 3 is wound around the side core leg 1b of the magnetic means 1 and the magnetic means 2 laid thereover.

The other coil 3 is wound around the side core leg 1c of the magnetic means 1 and the magnetic means 2 laid thereover.

The both coils 3 have the same number of turns. The winding directions of the two coils 3 are so set that the magnetomotive forces generated by the both coils may cancel each other in the second magnetic means.

As the conductor of the both coils 3, either copper wire or copper foil is used. The magnetic means 1 and magnetic means 2 are preferred to have the same dimensions in the mutual piled portions so that the both piled portions may be smooth and that the shape of the coil bobbin covering them may be simple.

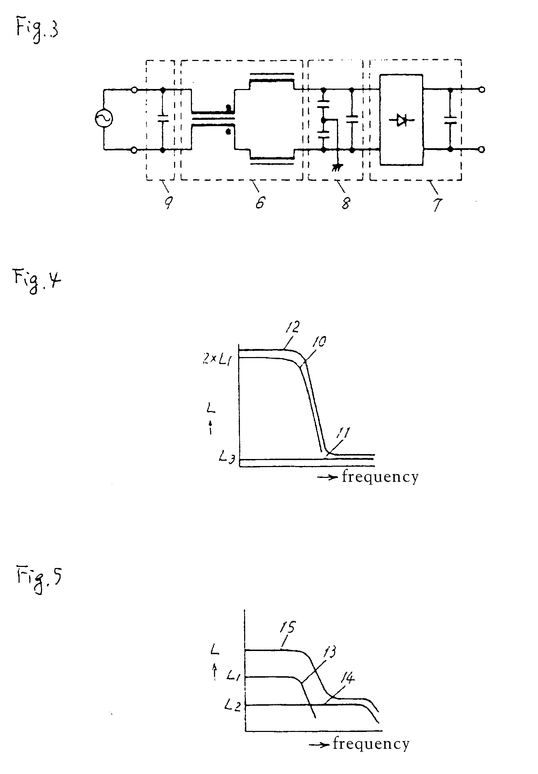

Magnetic fluxes 1f, 1g are generated in the magnetic means 1, and leakage magnetic fluxes 2h, 2i are generated between the magnetic means 1 and magnetic means 2. The magnetic fluxes 1f, 1g, 2h, 2i make up a normal mode choke 4 in Fig. 2. The magnetic fluxes 2f, 2g generated in the magnetic means 2 make up a common mode choke 5.

A curve 12 in Fig. 4 shows a frequency characteristic of normal mode of the choke coil 6. This inductance decreases the higher harmonics of the input current. The magnetic fluxes 1f, 1g of the magnetic means 1 compose an inductance 2L1 having two coils 3 connected in series, and a curve 10 is obtained. The leakage magnetic fluxes 2h, 2i compose a leakage inductance L3, and a curve 11 is obtained. A curve 12 is obtained by combining the curve 10 and the curve 11.

The leakage inductance L3 is not attenuated even at high frequency, and the choke coil of the invention therefore possesses a normal mode inductance of more than 10 times larger at high frequency as compared with that of the conventional choke coil.

A curve 15 in Fig. 5 shows a frequency characteristic of inductance of common mode of the choke coil 6. The magnetic fluxes 1f, 1g of the magnetic means 1 make up an inductance L1 of two coils 3 connected in parallel, and a curve 13 is obtained. The magnetic fluxes 2f, 2g and leakage magnetic fluxes 2h, 2i of the magnetic means 2 make up an inductance L2 of two coils 3 connected in parallel, and a curve 14 is obtained. A curve 15 is obtained by combining the curve 13 and the curve 14.

The two coils 3 are wound in a large number of turns in order to obtain a large normal mode inductance, therefore the inductance of the common mode shown by curve 15 is larger than the conventional common mode choke.

The frequency characteristic of the choke coil 6 shown in Fig. 4 and Fig. 5 may be changed, if necessary, by varying the magnetic characteristics of the magnetic means 1 and magnetic means 2. To vary the magnetic characteristics of the magnetic means 1 and magnetic means 2, the magnetic material is selected, or the magnetic material composed of plural magnetic materials is selected.

The magnetic means 1 and magnetic means 2 may be ring-shaped, as well as square-shaped, practically. The location of magnetic air gap 1j in the magnetic means 1 is not limited within the core leg 1a, but one or plural locations may be selected over the entire magnetic means 1.

Fig. 3 shows a constitution of a power source circuit using the choke coil 6 of the invention. Numeral 7 is a rectifying and smoothing block, 8 and 9 are capacitors. The choke coil 6 prevents noise while simultaneously decreasing the higher harmonics of the input current, therefore the noise filter is not used.

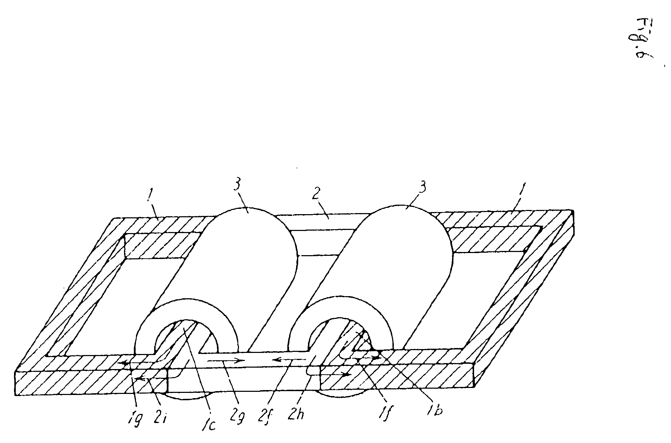

Fig. 6 is a perspective view showing a choke coil in the second embodiment of the invention. Two magnetic means 1 are positioned in the same horizontal plane one on each side of magnetic means 2. Around the piled portions of the magnetic means 1 and magnetic means 2, two coils 3 are wound. The both coils 3 have a same number of turns. The winding directions of the two coils 3 are so set that the magnetomotive forces generated by the both coils may cancel each other in the magnetic means 2.

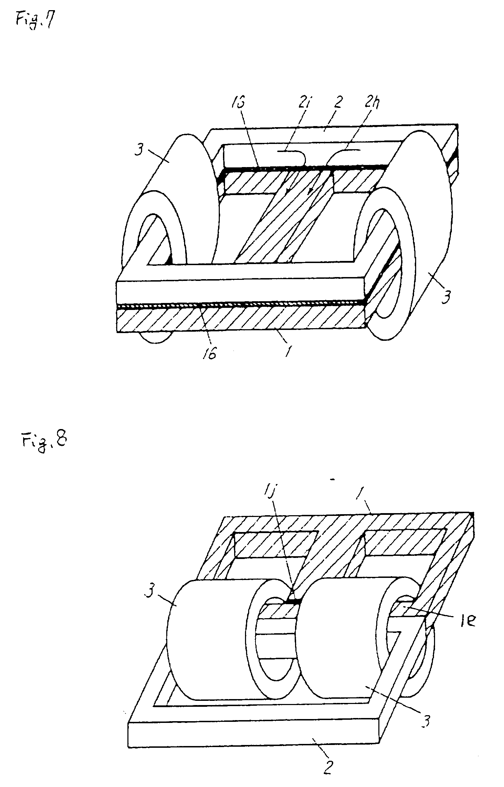

Fig. 7 is a perspective view showing a choke coil in the third embodiment of the invention. This embodiment is same as Embodiment 1 except that a magnetic air gap 16 is present between the magnetic means 1 and magnetic means 2 by inserting a non-magnetic thin film. The presence of the magnetic air gap 16 decreases the leakage magnetic fluxes 2h, 2i, and the magnetic means 2 is not magnetically saturated if a large current flows in the choke coil. However, decrease of leakage magnetic fluxes 2h, 2i brings about a disadvantage of decreasing the normal mode inductance. Yet, as mentioned above, the choke coil of the invention has a normal mode inductance of over ten times larger at high frequency as compared with that of the conventional choke coil, therefore decrease of inductance may be practically ignored.

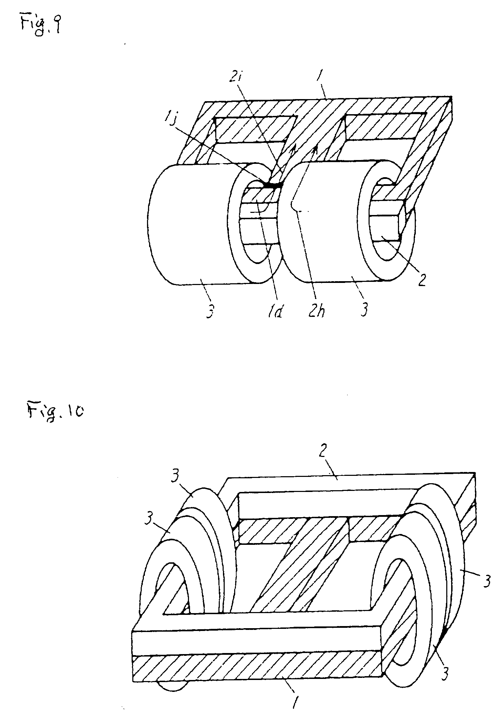

Fig. 8 is a perspective view showing a choke coil in the fourth embodiment of the invention. Same as in Embodiment 1, the magnetic means 1 composes two closed magnetic circuits by combination of E-shaped magnetic core and I-shaped magnetic core both made of silicon steel plates. Reference numeral 1j is a magnetic air gap for preventing magnetic saturation. Magnetic means 2 is a square-shaped ferrite core, which is abutting on a common core leg le of the magnetic means 1 in the horizontal direction. Around the abutting parts of the magnetic means 1 and magnetic means 2, two coils 3 are wound. The both coils 3 have a same number of turns. The winding directions of the two coils 3 are so set that the magnetomotive forces generated in both coils may cancel each other in the second magnetic means. The two coils 3 are mounted on the common core leg le, and hence the distance between the two coils is short. Therefore the magnetic fluxes in the opposite directions created by the two coils in the magnetic means 2 cancel each other almost completely, and, as a result. if a large current flows in the choke coil. the magnetic means 2 will not be saturated magnetically. This makes it possible to reduce the size of the magnetic means 2.

Fig. 9 is a perspective view showing a choke coil in the fifth embodiment of the invention. Magnetic means 2 is in a bar shape possessing an open magnetic circuit. The choke coil of this embodiment is small in size because the shape of the magnetic means 2 is small.

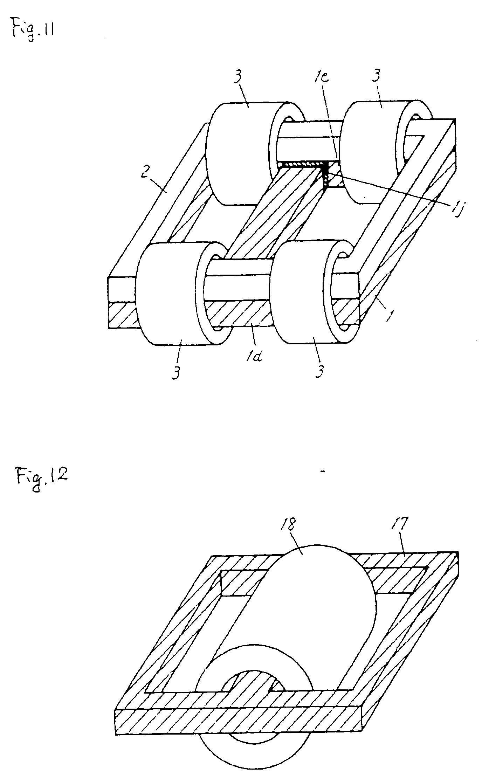

Fig. 10 is a perspective view showing a choke coil in the sixth embodiment of the invention. Herein, the two coils 3 in Fig. 1 are divided into two coils in series connection each, and the floating capacity of each coil is decreased. The high frequency characteristic of the common mode choke coil is enhanced as the floating capacity of the coil decreases.

Fig. 11 is a perspective view showing a choke coil in the seventh embodiment of the invention. Herein, the four coils in Fig. 10 are disposed on the common core leg. This constitution realizes the effects in both Embodiment 4 and Embodiment 6 at the same time.

## Claims

1. Choke coil comprising:
first magnetic means (1) possessing two closed magnetic circuits,
second magnetic means (2), possessing only one closed magnetic circuit, said first and second magnetic means having different magnetic properties,
a first piled portion formed by abutting parts of the two magnetic means, one part being a part of one of the closed magnetic circuits of the first magnetic means (1) and the other part being a part of the second magnetic means (2),
a second piled portion formed by a butting parts of the two magnetic means, one part being a part of the other closed magnetic circuit of the first magnetic means and the other part being an other part of the second magnetic means,
a first coil wound (3) around the first piled portion, and
a second coil wound (3) around the second piled portion,
wherein the winding directions of the both coils (3) are set so that the magnetomotive forces generated by the both coils (3) may cancel each other within the second magnetic means (2).

2. Choke coil according to claim 1, wherein each one of the two closed magnetic circuits of the first magnetic means (1) possesses one or a plurality of magnetic air gaps (1j).

3. Choke coil according to claims 1 or 2, wherein the first coil (3) and the second coil (3) each are composed of a plurality of coils (3) connected in series.

4. Choke coil according to at least one of claims 1 to 3, wherein the first magnetic means (1) and second magnetic means (2) are of the same dimensions in the first piled portion and second piled portion.

5. Choke coil according to at least one of claims 1 to 4, wherein the first coil and second coil (3) are commonly wound on the common core leg (1e) of the first magnetic means (1).

6. Choke coil according to at least one of claims 1 to 5, wherein the first and second magnetic means (1,2) are separated by a magnetic air gap (16).

7. Choke coil according to claim 6 wherein said magnetic air gap (16) is formed by inserting a non-magnetic thin film between the first and second magnetic means (1,2).

## Patentansprüche

1. Drosselspule umfassend:
eine erste magnetische Einrichtung (1), die zwei geschlossene magnetische Kreise besitzt,
eine zweite magnetische Einrichtung (2), die nur einen magnetischen Kreis besitzt, wobei die erste und zweite magnetische Einrichtung verschiedene magnetische Eigenschaften besitzen,
ein erstes gestapeltes Teil, welches von anliegenden Teilen der zwei magnetischen Einrichtungen gebildet ist, wobei das eine Teil ein Teil eines der geschlossenen magnetischen Kreise der ersten magnetischen Einrichtung (1) ist und das andere Teil ein Teil der zweiten magnetischen Einrichtung (2) ist,
ein zweites gestapeltes Teil, welches von anliegenden Teilen der zwei magnetischen Einrichtungen gebildet ist, wobei ein Teil ein Teil des anderen geschlossenen magnetischen Kreises der ersten magnetischen Einrichtung ist und das andere Teil ein anderes Teil der zweiten magnetischen Einrichtung ist,
eine erste Spule (3), welche um das erste gestapelte Teil gewickelt ist, und
eine zweite Spule (3), welche um das zweite gestapelte Teil gewickelt ist,
worin die Wickelrichtungen der beiden Spulen (3) so eingestellt sind, daß die magnetomotorischen Kräfte, die in beiden Spulen (3) erzeugt werden, sich in der zweiten magnetischen Einrichtung (2) einander auslöschen können.

2. Drosselspule nach Anspruch 1, worin jeder der zwei geschlossenen magnetischen Schaltkreise der ersten magnetischen Einrichtung eine oder eine Vielzahl von magnetischen Luftspalten (1j) besitzt.

3. Drosselspule nach Anspruch 1 oder 2, worin die erste Spule (3) und die zweite Spule (3) jeweils aus einer Vielzahl von in Reihe geschalteten Spulen (3) aufgebaut sind.

4. Drosselspule nach wenigstens einem der Ansprüche 1 bis 3, worin die erste magnetische Einrichtung (1) und zweite magnetische Einrichtung (2) gleiche Abmessungen in dem ersten gestapelten Teil und dem zweiten gestapelten Teil aufweist.

5. Drosselspule nach wenigstens einem der Ansprüche 1 bis 4, worin die erste Spule und die zweite Spule (3) gemeinsam auf einem gemeinsamen Spulenjoch (1e) der ersten magnetischen Einrichtung (1) gewickelt sind.

6. Drosselspule nach wenigstens einem der Ansprüche 1 bis 5, worin die erste und zweite magnetische Einrichtung (1, 2) durch einen magnetischen Luftspalt (16) getrennt sind.

7. Drosselspule nach Anspruch 6, worin der magnetische Luftspalt (16) gebildet wird durch Einführen eines nicht-magnetischen dünnen Filmes zwischen die erste und zweite magnetische Einrichtung (1, 2).

## Revendications

1. Bobine d'induction comprenant:
des premiers moyens (1) magnétiques possédant deux circuits magnétiques fermés,
des seconds moyens magnétiques (2) possédant un seul circuit magnétique fermé, lesdits premiers et seconds moyens magnétiques ayant des propriétés magnétiques différentes,
une première partie empilée formée par mise bout à bout de parties des deux moyens magnétiques, une partie étant une partie de l'un des circuits magnétiques fermés des premiers moyens magnétiques (1) et l'autre partie étant une partie des seconds moyens (2) magnétiques,
une seconde partie empilée formée par la mise bout à bout des parties des deux moyens magnétiques, une partie étant une partie de l'autre circuit magnétique fermé des premiers moyens magnétiques et l'autre partie étant une autre partie des seconds moyens magnétiques,
une première bobine enroulée (3) autour de la première partie empilée, et
une seconde bobine enroulée (3) autour de la seconde partie empilée,
dans laquelle, les directions d'enroulement des deux bobines (3) sont fixées de façon à ce que les forces magnétomotrices produites par les deux bobines (3) puissent s'annuler mutuellement à l'intérieur des seconds moyens (2) magnétiques.

2. Bobine d'induction selon la revendication 1, dans laquelle chacun des deux circuits magnétiques fermés des premiers moyens magnétiques (1) possède un ou plusieurs entrefers magnétiques (1j).

3. Bobine d'induction selon les revendications 1 ou 2, dans laquelle la première bobine (3) et la seconde bobine (3) sont chacune composées d'une pluralité de bobines (3) connectées en série.

4. Bobine d'induction selon au moins l'une des revendications 1 à 3, dans laquelle les premiers moyens magnétiques (1) et les seconds moyens magnétiques (2) ont les mêmes dimensions dans la première partie empilée et la seconde partie empilée.

5. Bobine d'induction selon au moins l'une des revendications 1 à 4, dans laquelle la première bobine et la seconde bobine (3) sont enroulées en commun sur une branche de noyau commune (1e) des premiers moyens magnétiques (1).

6. Bobine d'induction selon au moins l'une des revendications 1 à 5, dans laquelle les premiers et seconds moyens magnétiques (1, 2) sont séparés par un entrefer magnétique (16).

7. Bobine d'induction selon la revendication 6, dans laquelle ledit entrefer magnétique (16) est formé par insertion d'un film mince non magnétique entre les premiers et seconds moyens magnétiques (1, 2).
